# EUROPEAN PATENT APPLICATION

(11) **EP 0 624 941 A1**
(43) Date of publication of application: **17.11.1994**
(21) Application number: 94107044.3
(22) Date of filing: 05.05.1994
(51) Int. Cl.: H02G 5/06

(54) **Self-ventilated modular waveguide**

(30) Priority: 10.05.1993 IT TO930322
(71) Applicant: NAXSO TARDITO S.r.L., I-10135 Torino (IT)
(72) Inventor: Bosia, Pierfranco, I-10126 Torino (IT); Salice, Mario, I-10045 Piossasco (Torino) (IT)
(74) Representative: Modiano, Guido, Dr.-Ing.

(57) **Abstract**

The waveguide comprises a set of modular elements that are mutually connected by junction means; each element includes multiple hollow ducts (12) arranged edgeways and mutually spaced inside a metal casing (11) that acts as a supporting structure and as a protective conductor. The ducts (12) of each waveguide element are of the double-cavity type and are supported, in a mutually spaced arrangement, by insulating supports (13) individually formed by the adjacent arrangement of a plurality of spacers (14) that have enlarged heads (15) through which respective securing bolts (17) pass; the bolts (17) pack the spacers (14) together to clamp the ducts (12) and simultaneously connect the supports (13) to a pair of oppositely arranged walls (18-19) of the casing (11); the casing is completed by a lower and an upper closing plates (24-25) provided with or without a grille.

## Description

The present invention relates to a self-ventilated modular waveguide for carrying and distributing low- and medium-voltage electric power with nominal operating voltages up to 1000 V and with nominal capacities of 0.2 to 6 kA.

More specifically, the invention relates to a waveguide of the type including a set of modular elements that are mutually connected by junction means; each element includes a plurality of adjacent ducts which are air-insulated and accordingly mutually spaced, and are arranged edgeways inside a metal casing that acts as a supporting structure and as a protection conductor.

Furthermore, in the waveguide according to the present invention the ducts are of the double-cavity type described in European patent application no. 93104333.5 filed on March 17, 1993, which allow to produce waveguides which have different nominal capacities whilst having unchanged external dimensions since the useful section of the ducts is increased or decreased by varying the thickness of each duct toward the inside of the cavities.

An object of the present invention is to provide a waveguide of the specified type that has an extremely simplified and therefore economically advantageous structure.

Another object of the invention is to provide a waveguide in which the junction means of the different waveguide elements are entirely contained within the protective casing, which thus has a continuous profile and can be formed with continuous manufacturing methods, such as roll forming and the like, which are economical and suitable for mass-production.

Another object of the present invention is to provide a waveguide as specified, wherein the installation of the junction means and the mutual connection of the various waveguide elements is on one hand facilitated and on the other hand is such that it offers full assurance of a correct electrical connection of the ducts.

A further object of the invention is to improve the profile of the hollow ducts in order to allow a wider variation in their useful section with equal external dimensions.

With these objects and others in view, which will become apparent from the following detailed description, there is provided, according to the present invention, a self-ventilated modular waveguide wherein the hollow ducts of each waveguide element are supported, so that they are mutually spaced, by insulating supports formed by means of the adjacent arrangement of a plurality of spacers, each spacer having opposite T-shaped heads through which respective securing bolts pass, said bolts packing the spacers together so as to clamp the ducts and simultaneously connecting said supports to two opposite walls of the supporting casing, said casing being completed by lower and upper closing plates that are optionally provided with a grille.

Further characteristics, purposes and advantages of the present invention will become apparent from the following detailed description and with reference to the accompanying exemplifying drawings, wherein:
figure 1 is a perspective view of a straight waveguide element according to the present invention;
figure 2 is an exploded perspective view of the waveguide element of figure 1;
figure 3 is a transverse sectional view taken along the plane III-III of figure 1 at the spacer supports of the ducts;
figure 4 is a sectional view, similar to figure 3, of a constructive variation of the spacer supports;
figure 5 is a perspective view of a detail of the spacer supports of figure 3;
figure 6 is an exploded perspective view of the junction means of two waveguide elements;
figure 6a is another exploded perspective view of the junction means;
figure 7 is an exploded perspective view of a constructive variation of the ducts;
figure 7a is a sectional view taken along the plane VIIa-VIIa of figure 7;
figure 8 is a perspective view, similar to figure 1, illustrating a straight waveguide element in the version provided with taps for junction boxes;
figures 9 and 10 are perspective views of modular angle elements of the waveguide.

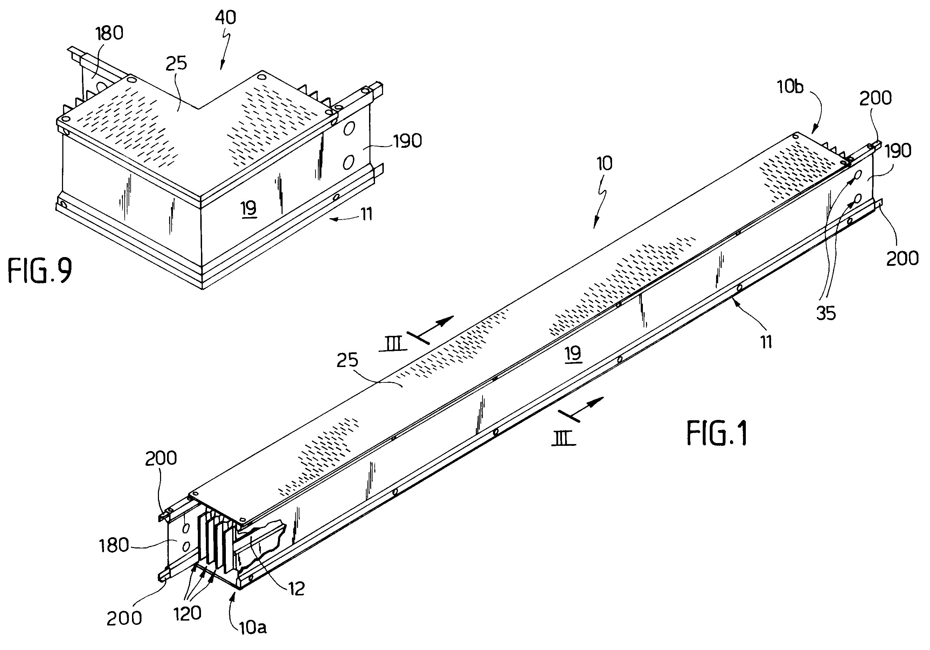

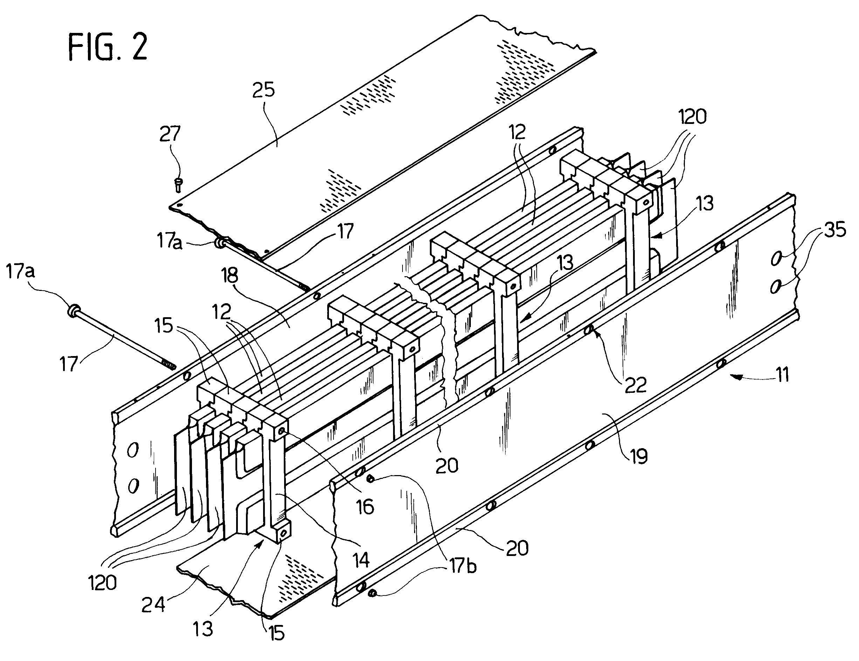

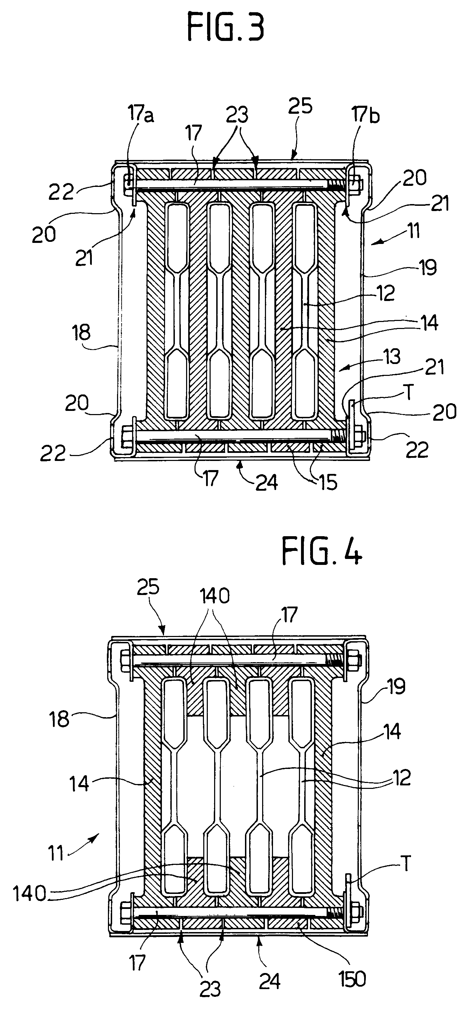

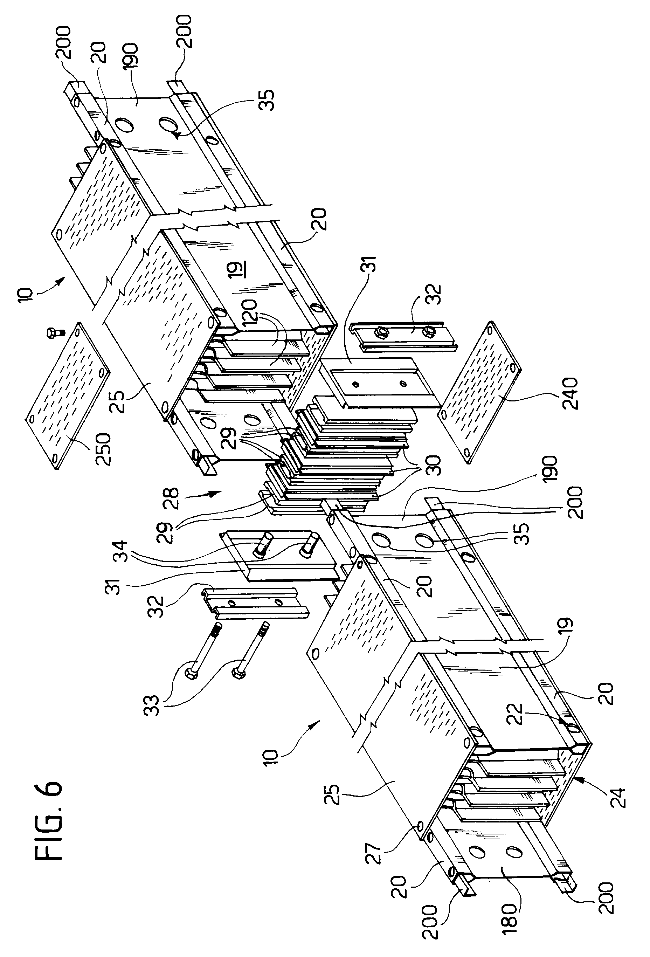

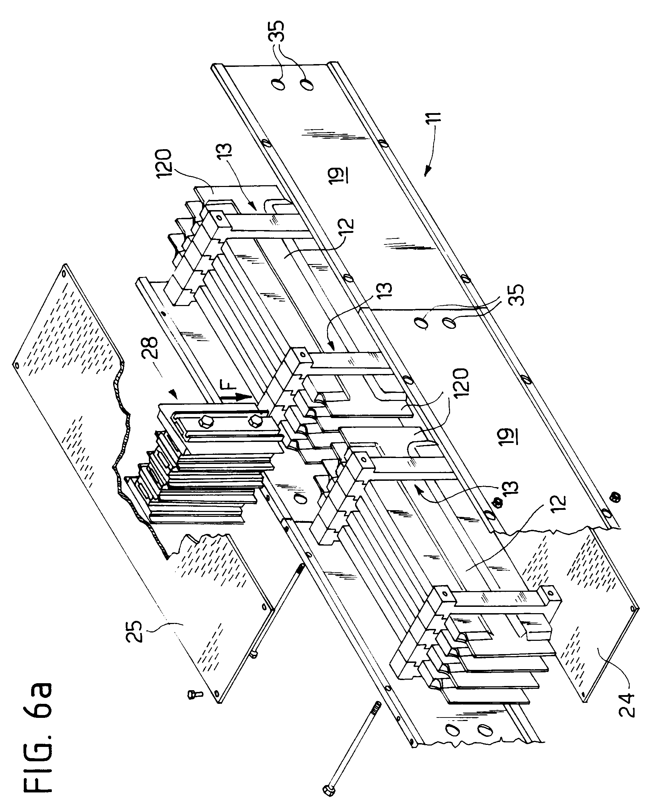

In figures 1 and 2, the reference numeral 10 designates a straight waveguide element that includes an outer metal shell 11, which acts as support and as protective conductor, and a plurality of ducts 12 of the type with opposite cavities described in the above mentioned prior patent application. The ducts 12 may be made of aluminum or copper and are obtained either by hot extrusion from corresponding billets or by juxtaposing and riveting or bolting corresponding half-ducts that are profiled by roll forming or the like and are individually provided with respective half-cavities. The ducts 12 are air-insulated and supported inside the casing 11 by insulating supports 13 that are produced by the adjacent arrangement of individual spacers 14. Each spacer 14 is made of a polymeric material with self-extinguishing and anti-arcing characteristics in temperature class H and has opposite T-shaped heads designated by the reference numeral 15. Both heads 15 of each spacer are provided with a through hole 16 for receiving a respective through bolt 17. The bolts 17 have the double purpose of mutually packing the spacers 14 of the support 13 in order to clamp the ducts 12 for mechanical retention, and of connecting each support 13 to a pair of opposite lateral walls 18-19 of the casing 11. The walls 18-19 have (figure 3) respective end edges that are formed by identical channel-shaped ridges 20; the supports 13 rest on the wall 21 of said ridges 20 which is directed towards the inside of the casing, and the head 17a or respectively the nut 17b of each bolt 17 acts on said wall. Circular openings 22 are formed on the outer side of the ridges 20 and at the axis of the bolts 17 and allow the insertion of a wrench for tightening the bolts 17. A metal strip T acting as a ground conductor can optionally be accommodated inside a ridge 20 and on the side of the locking nuts 17b of the bolts 17 and be locked by said nuts. The spacers 14 are arranged mutually adjacent so as to form a discontinuous gap 23 (figure 5) which has the purpose of avoiding possible electrical discharges on the bolts 17. As an alternative, as shown in the further embodiment of figure 4, the support 13 is formed by continuous end spacers 14 with oppositely arranged heads 15 and by discontinuous intermediate spacers 140 which have a single head 150 and extend partially between the ducts 12 for an extent that is sufficient to ensure the clamping thereof. This alternative arrangement can be advantageous for air circulation between the ducts 12. The casing 11 is completed by a lower closing plate 24 and by an upper closing plate 25; both plates can have self-ventilation grilles with slots, holes or diamond-like openings as shown in the accompanying figures or they can be solid, or one plate can be solid and the other can be provided with grilles, according to the desired protection degree of the waveguide with respect to the outside. The plates 24-25 are connected by means of rivets or bolts 27 that engage corresponding holes formed on the channel-shaped ridges 20 of the side walls 18-19 of the casing. Each element 10 has junction heads 10a-10b for mechanical and electric connection to other straight elements and/or to elbow junctions which will be described hereinafter. At each junction head the ducts 12 have a flat end portion 120 on which an electrical junction pack acts, generally designated by the reference numeral 28. The pack 28 is formed, in a known manner, by pairs of metal plates 29, preferably made of copper, which are adapted to clamp the flat ends 120 of two waveguide elements, such as the one indicated by the reference numeral 10, which are arranged end to end (figures 6-6a). Intermediate insulating spacers 30 and end spacers 31 are interlaid among the plates 29, and respective end plates 32 act on said end spacers and are subjected to the traction of pack securing bolts 33. The plates 29 and the spacers 30 have holes for accommodating insulating sleeves 34 that are formed monolithically in the end spacers 31 and in turn contain the bolts 33, insulating them electrically from the plates 29. A layer of antioxidant metal is preferably applied on the flat portion 120 of the duct 12 and is deposited in a known manner with the thermal-projection method. The junction pack 28, with the bolts 33 loosened beforehand, is fitted as shown by the arrow F of figure 6a on the flat ends 120 of the ducts 12 of the waveguide elements to be joined end to end and is entirely contained in the casing 11. The bolts 33 are then tightened with a wrench-like tool inserted into the casing 11 through openings 35 formed on an extension 190 of the side wall 19 of the element 10. A similar extension 180 is formed on the opposite lateral wall 18 and the extensions 180-190 protrude, as clearly shown in the figures, from the opposite heads of each waveguide element such as 10. The extensions 180-190 contain and insulate the pack 28 and allow the continuous mechanical coupling of the casings 11 of the two waveguide elements such as 10 arranged end to end. For this purpose, the ridges 20 of at least one extension have guiding and retention tenons 200 accommodated in the corresponding cavities of the ridges 20 of the walls 18-19 to be connected. The connection is completed by lower and upper covers 240 and 250 which are connected by means of screws or rivets to the ridges 20 of the extensions 180 and 190.

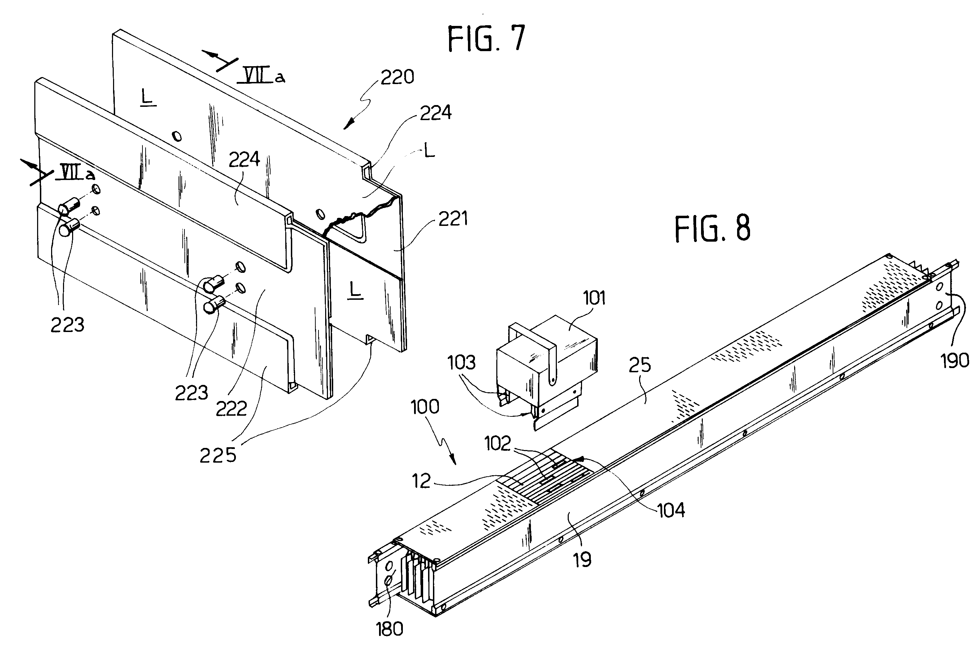

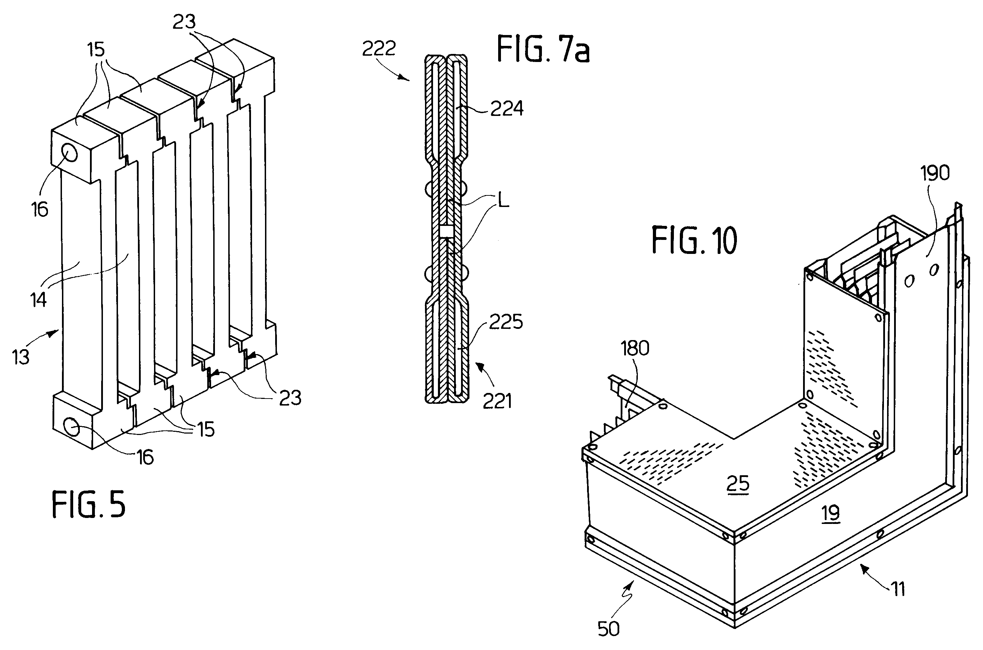

The embodiment of figure 7 illustrates a hollow duct 220 that is formed by mating two half-ducts 221-222 that are mutually juxtaposed and are connected by pins 223; each half-duct comprises respective half-cavities 224-225. According to this embodiment, a wing L of the metal plate that forms each half-duct is folded inward on the respective half-cavity as shown in figures 7 and 7a and can extend up to the centerline axis of the half-ducts, partially or totally overlapping the respective half-cavity 223 and 224; the thickness of the wing L helps to determine the useful section of the duct 220 which is the result of the juxtaposition and connection of the half-ducts 221-222. Figure 8 illustrates a straight waveguide element 100 that has taps for one or more junction boxes 101. The taps are constituted by through slots 102 provided on the smaller sides of the ducts 12 and connected to the cavities of said ducts. The contact clamps 103 of the box 101 fit in the slots 102, and the box is located at a connection opening 104 that is formed by an interruption in the closing plate 25 and/or 24. Figure 9 illustrates a flat-elbow junction element 40 of the waveguide and figure 10 illustrates a double-elbow junction 50 that is not co-planar. Both junctions are formed by a casing 11 and by ducts 12; in the figures, the parts corresponding to those described with reference to figures 1 and 2 are designated by the same reference numerals.

Naturally, without altering the concept of the invention, the details of execution and the embodiments may be changed extensively with respect to what is described and illustrated by way of non-limitative example, without thereby abandoning the scope of the invention.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Self-ventilated modular waveguide for carrying and distributing low- and medium-voltage electric power, comprising a set of modular elements (10-40-50) that are mutually connected by junction means (28), each element including multiple hollow ducts (12) arranged edgeways and mutually spaced inside a metal casing (11) which acts as a supporting structure and as a protective conductor, characterized in that said ducts (12) of each waveguide element are of the double-cavity type and are supported, in a mutually spaced arrangement, by insulating supports (13) individually formed by the adjacent arrangement of a plurality of spacers (14) which have enlarged heads (15) through which respective securing bolts (17) pass, said bolts (17) being adapted to pack together said spacers (14) in order to clamp said ducts (12) and simultaneously connect said supports (13) to a pair of oppositely arranged walls (18-19) of the casing (11); the casing being completed by a lower closing plate (24) and by an upper closing plate (25).

2. Waveguide according to claim 1, characterized in that either of said lower closing plate (24) and said upper closing plate (25) are provided with a grille.

3. Waveguide according to claim 1, characterized in that the oppositely arranged walls (18-19) of the casing (11) have end edges shaped like channel-like ridges (20), in that the insulating supports (13) rest on the wall (21) of the ridges that is directed toward the inside of the casing, and in that the head (17a) or, respectively, the nut (17b) of each locking bolt (17) act on said wall (21).

4. Waveguide according to claim 1, characterized in that it comprises a metal strip (T) which acts as a ground conductor and is accommodated inside at least one ridge (20), said strip being locked by said securing bolts (17).

5. Waveguide according to claims 1 to 4, characterized in that said spacers (14) that form each insulating support (13) are arranged mutually side by side so as to form a discontinuous gap (23) for preventing any electrical discharges between the ducts (12) and the securing bolts (17).

6. Waveguide according to claims 1 to 4, characterized in that each insulating support (13) is formed by continuous end spacers (14) which have oppositely arranged end heads (15) and by intermediate discontinuous spacers (140) that have a single head (150) and extend partially between the ducts (12).

7. Waveguide according to the preceding claims, characterized in that each waveguide element (10-40-50) has junction heads for the mutual mechanical and electrical connection of said elements, and in that the ducts (12) have, at said heads, flat end portions (120) on which an electrical junction pack (28) acts, said pack being formed by pairs of metal plates (29) and insulating spacers (30-31) subjected to the traction of securing bolts (33).

8. Waveguide according to claims 1 and 7, characterized in that said oppositely arranged walls (18-19) of the metal casing (11) have, at the opposite heads of each waveguide element, respective extensions (180-190) for connection to the corresponding wall (18-19) of the adjacent waveguide element, and in that at least one of the extensions (180-190) has, at its ridge-like edges (20), guiding and retention tenons (200) which fit in the cavities of the corresponding ridge-like edges (20) of the adjacent element.

9. Waveguide according to claim 7, characterized in that the electrical junction pack (28) is contained inside the metal casing (11).

10. Waveguide according to one or more of the preceding claims, characterized in that the hollow ducts (220) are formed by the mating of two half-ducts (221-222) that are mutually juxtaposed and connected by pins (223) and in that a wing (L) of the metal plate that forms each half-duct is folded inward on the respective half-cavity and can extend up to the centerline axis of the half-ducts, partially or fully overlapping the respective half-cavity; the thickness of the wing (L) helps to determine the useful section of the duct (220).

11. Waveguide according to any of the preceding claims, characterized in that it comprises waveguide elements (100) that have taps for one or more junction boxes (101) and in that the taps are constituted by through slots (102) provided on the smaller sides of the ducts (12) and connected to the cavities of said ducts, said slots receiving corresponding engagement clamps (103) supported by said boxes (101).
